# EUROPÄISCHE PATENTSCHRIFT

(11) **EP 2 983 939 B1**
(45) Veröffentlichungstag und Bekanntmachung des Hinweises auf die Patenterteilung: **10.05.2017**
(21) Anmeldenummer: 14711448.2
(22) Anmeldetag: 19.03.2014
(51) Int. Cl.: B60L 1/00, B60L 3/00, B60L 3/04, B60L 11/12, B60L 11/18, H02J 7/00

(54) **SPANNUNGSFREISCHALTUNG EINES HOCHVOLTFAHRZEUG**
VOLTAGE DISCONNECTION OF A HIGH VOLTAGE VEHICLE
MISE HORS TENSION D'UN VÉHICULE HAUTE TENSION

(30) Priorität: 11.04.2013 DE 102013006254
(43) Veröffentlichungstag der Anmeldung: 17.02.2016
(73) Patentinhaber: Audi AG, 85045 Ingolstadt (DE)
(72) Erfinder: THÖMMES, Marco, 85049 Ingolstadt (DE); PROTITSCH, Margot, 86558 Freinhausen (DE); ENGELHARD, Felix, 85049 Ingolstadt (DE); BITTNER, Thomas, 85051 Ingolstadt (DE); NEUGEBAUER, Heinz, 92358 Seubersdorf (DE)
(74) Vertreter: Wohnert, Dietmar
(86) Internationale Anmeldenummer: PCT/EP2014/000749
(87) Internationale Veröffentlichungsnummer: WO 2014/166587

(56) Entgegenhaltungen:
- WO-A2-2011/082733
- DE-A1-102010 052 375
- DE-A1-102011 104 224
- DE-A1-102011 104 819

## Beschreibung

Die Erfindung betrifft ein Verfahren zum Absichern eines Hochvolt-Bordnetzes eines Kraftfahrzeugs für eine Reparatur- und/oder Wartungsarbeit an dem Kraftfahrzeug. Zu der Erfindung gehören auch ein Kraftwagen mit einem Hochvolt-Bordnetz sowie ein Diagnosegerät für einen solchen Kraftwagen.

Bei Arbeiten an einem Hochvolt-System eines Kraftwagens oder auch in der Nähe eines solchen Hochvolt-Systems muss sichergestellt sein, dass dieses System spannungsfrei ist. Hierzu wird eine Spannungsfreischaltung durchgeführt. Ein erster wichtiger Schritt hierbei ist, dass eine Verbindung zwischen einer Hochvoltbatterie des Hochvolt-Systems und einem Hochvolt-Bordnetz zum Verteilen der Hochspannung im Kraftfahrzeug unterbrochen wird. Hierzu sind in der Regel in der Hochvoltbatterie Schaltschütze vorgesehen, die durch eine Steuereinrichtung geöffnet werden. Hierdurch wird dann der Energiezugang der elektrischen Energie der Hochvoltbatterie in das Hochvolt-Bordnetz blockiert. Anschließend kann durch manuelle Messung mittels eines Spannungsprüfers oder aber auch automatisiert mittels einer z.B. fest im Kraftfahrzeug installierten Prüfungseinrichtung, also z.B. einem Steuergerät, die elektrische Spannung im Hochvolt-Bordnetz gemessen werden. Gegebenenfalls muss eine Restspannung, wie sie durch Kapazitäten im Hochvolt-Bordnetz gespeichert sein kann, abgebaut werden. Anschließend kann dann eine Person die nötigen Arbeiten am Kraftfahrzeug durchführen.

Währenddessen muss aber sichergestellt bleiben, dass nicht versehentlich wieder eine elektrische Spannung im Hochvolt-Bordnetz aufgebaut wird. Die Berufsgenossenschaft hat hierzu an die Feststellung und Sicherstellung der Spannungsfreiheit die Anforderung gestellt, dass nach der Spannungsfreischaltung bestimmte Arbeitsschritte nicht durchgeführt werden dürfen, da diese dazu führen könnten, dass wieder elektrische Spannung im Hochvolt-Bordnetz aufgebaut wird. Beispielsweise darf niemand den Ladestecker einer fahrzeugexternen Ladeeinrichtung in den Steckschacht des Ladegeräts des Kraftfahrzeugs einstecken, nachdem einmal die Spannungsfreischaltung erfolgt ist. Bei einem Kraftfahrzeugtyp, welcher zusätzlich einen Verbrennungsmotor aufweist, um einen elektrischen Generator im Kraftfahrzeug anzutreiben, darf auch dieser Verbrennungsmotor nicht mehr gestartet werden, weil dann der Generator angetrieben und elektrische Spannung erzeugt wird. Kraftfahrzeugtypen mit solchen zusätzlichen Verbrennungsmotoren sind auch als Plug-in-Fahrzeuge oder Range-Extender-Fahrzeuge bekannt. Die beschriebenen Sicherheitsmaßnahmen werden in der Regel prozesstechnisch umgesetzt, d.h. es gibt genaue Arbeitsanweisungen, welche von denjenigen Personen befolgt werden müssen, die an dem Kraftfahrzeug arbeiten. Damit bleibt der Mensch als größter Unsicherheitsfaktor während der Arbeiten, da beispielsweise durch unkoordinierte Zusammenarbeit eine Person bereits versehentlich einen Ladestecker einstecken könnte, während eine andere Person beispielsweise noch unter dem Fahrzeug arbeitet.

Aus der DE 10 2010 063126 A1 und WO 2012 072 308 A2 sind Ladevorrichtungen mit einer Vorrichtung zur Trennung einer Hochvoltbatterie von einem Zwischenkreis und zur Trennung stromführender Leitungen eines Ladekabels sowie eine Überwachungseinrichtung bekannt, welche dazu ausgebildet ist, die Ladevorrichtung auf einen Gefahrenzustand hin zu überwachen, welcher die Gefahr eines Stromschlags hervorruft. Die Vorrichtung zur Trennung und eine zusätzliche Endladevorrichtung sind dazu ausgelegt, in Abhängigkeit des ermittelten Gefahrenzustands jeweils ein Steuersignal zu erzeugen.

In der DE 10 2011 104 819 A1 ist ein Kraftfahrzeughochvoltsystem beschrieben, bei welchem ein erster Hochvoltbereich nach einer Trennung von einem zweiten Hochvoltbereich durch eine Trenneinheit zusätzlich gegen ein Wiedereinschalten gesichert wird. Das Sichern erfolgt durch Stromlos-Schalten der Batterieschütze, Setzen eines Blockierbits in einer Hochvoltkomponente, wie beispielsweise einem Elektromotor, Deaktivieren eines Ladegeräts für das Hochvoltsystem oder Abschalten des Elektromotors, um eine durch Schieben des Kraftfahrzeugs erzeugte Spannung zu vermeiden.

In der DE 10 2010 052 375 A1 ist ein Kraftfahrzeug beschrieben, bei dem eine Traktionsbatterie über ein Ladekabel aufgeladen werden kann, wobei ein elektrischer Kontakt eines Ladeanschlusselements der Energiespeichereinheit unterbrochen wird, wenn das Ladekabel mit dem Ladeanschlusselement nicht innerhalb eines bestimmten Zeitraums nach Abstellen des Kraftfahrzeugs verbunden wird. Zum Sperren kann beispielsweise ein Stift in eine Anschlussbuchse des Ladegeräts motorisch eingefahren werden. Aus DE102011104224 ist ein Verfahren zum Absichern eines Hochvolt-Bordnetzes während einer Reparatur bekannt, bei dem der Energiezugang durch den Generator durch die Stilllegung des Verbrennungsmotors blockiert wird.

Aus GB2335404 ist das Blockieren eines Generators zur Verhinderung einer Spannungseinspeisung in den Hochvollkreis eines elektrischen Fahrzeugs bekannt.

Der Erfindung liegt die Aufgabe zugrunde, anstelle der beschriebenen prozesstechnischen Maßnahmen ein Hochvolt-Bordnetz eines Kraftfahrzeugs für eine Reparatur- und/oder Wartungsarbeit durch technische Maßnahmen abzusichern.

Die Aufgabe wird durch die Gegenstände der unabhängigen Patentansprüche gelöst. Vorteilhafte Weiterbildungen der Erfindung sind durch die Unteransprüche gegeben.

Das erfindungsgemäße Verfahren baut auf dem Ansatz auf, zum Absichern des Hochvolt-Bordnetzes eine Spannungsfreischaltung durchzuführen, wie sie bereits beschrieben wurde, d.h. den Energiezugang einer Energieversorgungseinrichtung des Kraftfahrzeugs in das Hochvolt-Bordnetz zu unterbrechen. Dies kann beispielsweise in der beschriebenen Weise durch Öffnen eines Schaltschützes geschehen, über welches eine Hochvoltbatterie mit dem Hochvolt-Bordnetz gekoppelt sein kann. Die Hochvoltbatterie wäre in diesem Fall die Energieversorgungseinrichtung oder ein Teil davon. Die Energieversorgungseinrichtung kann zusätzlich oder alternativ dazu z.B. eine Brennstoffzelle umfassen. Das Unterbrechen des Energiezugangs selbst ist nicht Bestandteil der Erfindung. Es kann in an sich bekannter Weise z.B. manuell oder durch ein Steuergerät durchgeführt werden.

Um nun die Absicherung des Hochvolt-Bordnetzes zu verbessern, wird bei dem erfindungsgemäßen Verfahren der Energiezugang zusätzlich deaktiviert oder blockiert, d.h. es wird z.B. durch Deaktivieren einer Steuerschaltung des Energiezugangs oder durch mechanisches Blockieren des Energiezugangs einer Bedienperson unmöglich gemacht, die Energieversorgungseinrichtung wieder an das Hochvolt-Bordnetz zuzuschalten. Im Fall des genannten Schaltschützes kann z.B. das Steuersignal zum Schließen des Schaltschützes unterdrückt werden oder das Schaltschütz mechanisch blockiert werden. Zusätzlich oder alternativ zu dem besagten Energiezugang kann bei dem erfindungsgemäßen Verfahren zumindest ein anderer Energiezugang in das Hochvolt-Bordnetz blockiert werden. Bei dem zumindest einen weiteren Energiezugang handelt es sich hierbei jeweils um einen Zugang, der dazu ausgelegt ist, die Energie einer weiteren Energiequelle dem Hochvolt-bordnetz zuzuführen, beispielsweise einer optional zuschaltbaren Energiequelle. Der Erfindung liegt dabei die Erkenntnis zugrunde, dass es in einem Hochvolt-Bordnetz nur eine verhältnismäßig kleine Anzahl an Energiezugängen gibt, über welche eine Hochvolt-Spannung nach einer Spannungsfreischaltung noch in der Hochvolt-Bordnetz eingespeist werden kann. Indem diese Energiezugänge automatisch blockiert werden, also ohne dass hierzu ein Zutun einer Bedienperson nötig ist, erfolgt eine technische Absicherung, anstelle einer prozesstechnischen Absicherung, so dass selbst bei einem versehentlichen Fehlverhalten einer mit der Arbeit am Kraftfahrzeug betrauten Person hierdurch nicht versehentlich eine elektrische Hochvolt-Spannung im Hochvolt-Bordnetz erzeugt wird. Das erfindungsgemäße Verfahren weist also den Vorteil auf, dass der Mensch als größter Unsicherheitsfaktor aus dem Prozess genommen ist und durch technische Maßnahmen Prozessfehler verhindert werden.

Das automatisierte Blockieren der Energiezugänge wird durch eine Steuereinrichtung gesteuert. Beispielsweise ein Programmmodul eines Steuergeräts oder aber auch durch eine separate Hardware realisiert sein kann. Als Hardware kann das Steuergerät in dem Kraftfahrzeug eingebaut sein oder aber für Reparatur- und/oder Wartungszwecke angeschlossen werden oder über eine Funkverbindung mit dem Kraftfahrzeug kommunizieren. Im Zusammenhang mit der Bereitstellung der Steuereinrichtung in dem Kraftfahrzeug kann beispielsweise das Motorsteuergerät des Kraftfahrzeugs oder ein Gateway eines Kommunikationsbusses des Kraftfahrzeugs, beispielsweise eines CAN-Busses (CAN - controller area network), zur Durchführung des erfindungsgemäßes Verfahren ertüchtigt werden. Die Funktionen der Steuereinrichtung können auch auf mehrere Gräte und/oder Programmmodule verteilt sein.

Gemäß dem Verfahren wird als einer der Energiezugänge ein elektrischer Generator blockiert, der zum Erzeugen von elektrischer Energie im Kraftfahrzeug vorhanden ist. Hierzu kann beispielsweise ein Spannungsausgang des Generators kurzgeschlossen werden oder eine Schaltung für die magnetische Erregung des Generators deaktiviert werden. Beispielsweise können also im zweiten Fall durch Öffnen eines oder mehrerer Schaltelemente die Spulenströme in dem Generator unterbrochen werden.

Eine Weiterbildung dieses Verfahrens sieht vor, dass zum Blockieren des Generators nicht der Generator selbst direkt, sondern bei einem Verbrennungsmotor, der mit dem elektrischen Generator mechanisch gekoppelt ist, ein Motorsteuergerät des Verbrennungsmotors deaktiviert wird. Dann lässt sich der Motor nicht mehr starten und somit auch nicht versehentlich der Generator betreiben.

Anstelle einer Deaktivierung des Motorsteuergeräts oder zusätzlich dazu kann vorgesehen sein, eine Welle zum Antreiben des Generators mittels einer elektro-hydraulischen Bremse des Kraftfahrzeugs festzustellen, also beispielsweise der Parkbremse des Kraftfahrzeugs. Indem eine solche elektro-hydraulische Bremse angezogen oder geschlossen wird, ist in der Regel indirekt über ein Differenzial, auch eine Welle des Antriebsstrangs blockiert, über welche der Verbrennungsmotor mit dem Generator mechanisch gekoppelt ist. Dies blockiert dann also das Übertragen von mechanischer Energie aus dem Verbrennungsmotor hin zum Generator und verhindert damit das Einbringen von elektrischer Energie in das Hochvolt-Bordnetz über den Generator.

Bei dem erfindungsgemäßen Verfahren ergeben sich unterschiedliche Ausführungsformen, je nach dem welche weiteren Energiezugänge das Fahrzeug aufweist und welche davon gezielt durch die Steuereinrichtung blockiert werden.

So sieht eine Ausführungsform des Verfahrens vor, als weiteren Energiezugang ein Ladegerät zu blockieren, über welches von einem stationären elektrischen Versorgungsnetz eines Energieversorgers elektrische Energie über das Hochvolt-Bordnetz in einen Energiespeicher des Kraftfahrzeugs, z.B. in eine Hochvoltbatterie, übertragen werden kann. Ein solches Ladegerät weist in der Regel in einem Hochsetzsteller oder Tiefsetzsteller oder auch in anderen Schaltungselementen zumindest ein steuerbares Schaltelement auf, insbesondere einen Leistungs-Halbleiterschalter, wie beispielsweise einen Transistor. Ein steuerbares Schaltelement zeichnet sich allgemein dadurch aus, dass es mittels eines elektrischen Signals zwischen einem leitenden und einem sperrenden Zustand umgeschaltet werden kann. Beim Transistor wird dieses Signal an der Basis bzw. am Gate angelegt. Bei der Ausführungsform des Verfahrens ist nun vorgesehen, ein solches Steuersignal zu blockieren, wodurch dann die Schaltelement nicht-leitend bleiben und das Ladegerät funktionslos wird.

Eine andere Ausführungsform des Verfahrens sieht vor, als einen weiteren Energiezugang einen Steckschacht für einen Ladestecker zu blockieren. Hierzu wird bei abgezogenem Ladestecker der Steckschacht durch eine Verriegelungseinrichtung des Steckschachtes verriegelt. Beispielsweise kann also eine Abdeckklappe des Steckschachts, die den Steckschacht beispielsweise vor Regen schützt, verriegelt werden, wie dies auch durch eine Zentralverriegelung des Kraftfahrzeugs in der Regel getan wird. Durch Verriegeln des Steckschachts ist es dann nicht mehr möglich, einen Ladestecker in den Steckschacht einzustecken und hierdurch einen Ladevorgang auszulösen, bei welchem elektrische Spannung in dem Hochvolt-Bordnetz erzeugt wird.

Im Zusammenhang mit der Verriegelung eines Steckschachts sieht eine besondere Ausführungsform des Verfahrens vor, als die Verriegelungseinrichtung des Steckschachts in den Steckschacht einen Pin oder Haltestift hineinzufahren oder einzuführen, durch den der Ladestecker im Steckschachtgehalten wird. Normalerweise wird ein solcher Haltestift also nur bei steckendem Ladestecker eingeführt, so dass der Ladestecker nicht abgezogen werden kann. Bei abgezogenem Ladestecker kann derselbe Haltestift aber der hier beschriebenen zweiten Funktion zugeführt werden, indem er bei abgezogenem Ladestecker in den Steckschacht eingefügt wird und hierdurch das Einstecken des Ladesteckers eines Ladekabels blockiert. Die Verwendung des Haltestifts weist den Vorteil auf, dass dieser in der Regel bereits vorhanden ist, da Stecker während des Ladevorgangs ebenfalls verriegelt werden müssen.

Bevorzugt wird während der Spannungsfreischaltung überprüft, ob der Ladestecker steckt. Wenn dieser steckt, dann wird der Werkstattmitarbeiter darauf hingewiesen. Dies kann entweder direkt durch eine im Kraftfahrzeug bereitgestellte Steuereinrichtung oder indirekt über eine Steuereinrichtung eines Diagnosegeräts erfolgen, welches mit dem Kraftfahrzeug kommuniziert. Nur wenn der Ladestecker gezogen ist oder nach Abgabe des Warnhinweises gezogen wurde, wird dann die Spannungsfreischaltung z.B. über das Diagnosegerät (oder direkt durch die Steuereinrichtung im Kraftfahrzeug) fortgesetzt. Wenn der Ladestecker gezogen wurde, dann wird also beispielsweise der beschriebene Pin oder Haltestift zur Verriegelung des Steckschachtes zugefahren, so dass dann während der gesamten Zeit der Spannungsfreischaltung kein Ladestecker unbeabsichtigt, beispielsweise durch eine unachtsame Person, gesteckt werden kann.

Wie bereits ausgeführt, kann die Steuereinrichtung in das Kraftfahrzeug integriert sein, beispielsweise als integriertes Steuergerät oder aber auch verteilt auf mehrere Steuergeräte. In diesem Zusammenhang umfasst die Erfindung auch ein Kraftfahrzeug mit einem Hochvolt-Bordnetz und einer Steuereinrichtung, die dazu ausgelegt ist, eine Ausführungsform des erfindungsgemäßen Verfahrens durchzuführen. Das erfindungsgemäße Kraftfahrzeug ist bevorzugt als Personenkraftwagen ausgestaltet.

Eine andere Möglichkeit besteht in der externen Steuerung des Kraftfahrzeugs, um die Spannungsfreischaltung des Hochvolt-Bordnetzes des Kraftfahrzeugs, d.h. das Blockieren der Zugänge gemäß der Erfindung durchzuführen. In diesem Zusammenhang umfasst die Erfindung ein Diagnosegerät für ein Kraftfahrzeug. Das erfindungsgemäße Diagnosegerät weist eine Kommunikationseinrichtung auf, die dazu ausgelegt ist, Steuersignale an eine Kommunikationsschnittstelle des Kraftfahrzeugs zu übertragen. Bei der Kommunikationseinrichtung kann es sich beispielsweise um Kommunikationskabel und ein Kommunikationsmodul handeln, wobei das Kommunikationskabel dann beispielsweise an einen OBD-Bus (OBD - on board diagnosis) oder einen CAN-Bus des Kraftfahrzeugs angeschlossen werden kann. Die Kommunikationseinrichtung kann aber auch eine Funkschnittstelle des Diagnosegeräts realisieren, also beispielsweise in WLAN-Modul (WLAN - wireless local area network) umfassen. Das erfindungsgemäße Diagnosegerät umfasst auch eine Steuereinrichtung, die dazu ausgelegt ist, die genannten Steuersignale zum Blockieren von Energiezugängen eines Hochvolt-Bordnetzes des Kraftfahrzeugs nach einer Ausführungsform des erfindungsgemäßen Verfahrens zu erzeugen. Das erfindungsgemäße Diagnosegerät weist den Vorteil auf, dass mit ihm für mehrere Kraftfahrzeuge die Durchführung des erfindungsgemäßen Verfahrens ermöglicht ist, ohne dass die Kraftfahrzeuge in spezieller Weise ausgerüstet sein müssen.

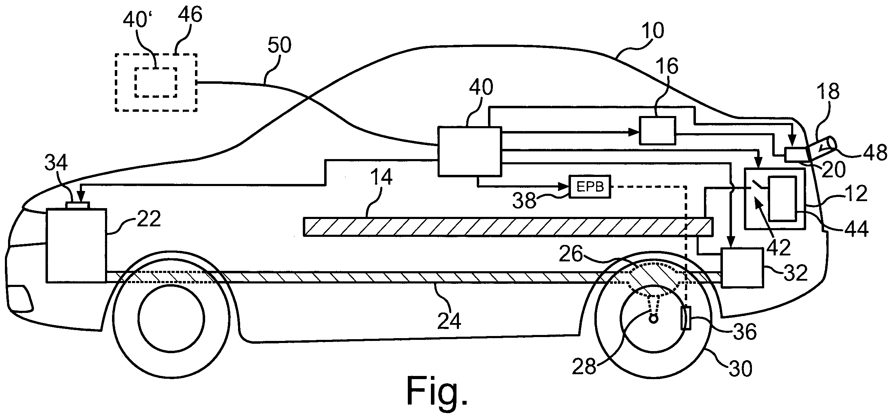

Im Folgenden ist die Erfindung noch einmal anhand eines konkreten Ausführungsbeispiels erläutert. Hierzu zeigt die einzige Figur eine Ausführungsform des erfindungsgemäßen Kraftfahrzeugs.

In der Figur ist in schematischer Darstellung ein Kraftfahrzeug 10 gezeigt, bei dem es sich beispielsweise um einen Personenkraftwagen handeln kann. Das Kraftfahrzeug 10 kann eine oder mehrere Energieversorgungseinrichtungen aufweisen. In dem in der Figur gezeigten Beispiel ist ein Energiespeicher der Kraftfahrzeugs, insbesondere eine Hochvoltbatterie 12, als Energieversorgung bereitgestellt. Die Hochvoltbatterie 12 kann mit einem Hochvolt-Bordnetz 14 elektrisch verbunden sein. Das Hochvolt-Bordnetz 14, oder kurz Bordnetz 14, kann beispielsweise Stromschienen und/oder Drähte aufweisen, über welche die von der Hochvoltbatterie 12 erzeugte elektrische Hochvolt-Spannung zu (nicht dargestellten) elektrischen Hochvoltverbrauchern geleitet wird. Unter einer Hochvolt-Spannung ist im Zusammenhang mit der Erfindung eine elektrische Spannung zu verstehen, die betragsmäßig größer als 60 Volt, insbesondere größer als 200 Volt, beispielsweise 400 Volt, ist. Einer der elektrischen Hochvoltverbraucher kann beispielsweise ein (nicht dargestellter) Elektromotor sein, mittels welchem das Kraftfahrzeug 10 für eine Fahrt angetrieben werden kann.

Zum Aufladen der Hochvoltbatterie 12 weist das Kraftfahrzeug 10 ein Ladegerät 16 auf, das über das Bordnetz 14 mit der Hochvoltbatterie 12 gekoppelt sein kann. Das Ladegerät 16 kann elektrischen Strom von beispielsweise einem fahrzeugexternen elektrischen Versorgungsnetz empfangen. Hierzu weist das Kraftfahrzeug 10 einen Steckschacht 18 zum Einstecken eines Steckers eines Ladekabels auf. Der Steckschacht ist Bestandteil einer Anschlussvorrichtung 20, die elektrisch mit dem Ladegerät 16 verbunden ist.

Das Kraftfahrzeug 10 kann auch einen Verbrennungsmotor 22 aufweisen. Der Verbrennungsmotor 22 kann z.B. über eine Welle 24, ein Differenzial 26 und eine Achse 28 mit einem Rad 30 des Kraftfahrzeugs 10 gekoppelt sein, um hierdurch das Rad 30 ebenfalls für eine Fahrt des Kraftfahrzeugs antreiben zu können. Über die Welle 24 kann der Verbrennungsmotor 22 auch mit einem Generator 32 zum Erzeugen einer Hochvolt-Spannung gekoppelt sein. Der Generator 32 ist mit dem Bordnetz 14 gekoppelt. Die Hochvolt-Spannung des Generators 32 wird über das Bordnetz 14 an die Hochvoltbatterie 12 zum Aufladen derselben übertragen. Während der Verbrennungsmotor 22 das Rad 30 antreibt, kann hierdurch auch ein Teil der Antriebsleistung des Verbrennungsmotors 22 zum Betreiben des Generators 32 genutzt werden. Der Generator 32 erzeugt hierdurch eine Hochvolt-Spannung, die über das Bordnetz 14 zum Aufladen der Hochvoltbatterie 12 genutzt werden kann. Der Generator 22 kann auch eine elektrische Maschine sein, die auch zum Antreiben des Kraftfahrzeugs 10 genutzt sein kann, wie dies beispielsweise bei einem Plug-in-Hybrid-Fahrzeug oder einem Range-Extender-Fahrzeug der Fall sein kann.

Der Verbrennungsmotor 22 wird über ein Motorsteuergerät 34 gesteuert. Das Antriebsrad 30 kann, beispielsweise zum Parken des Kraftfahrzeugs 10, durch eine elektronische Bremse (EPB - electronic power break) blockiert werden. Diese Bremse umfasst eine elektro-hydraulische Bremse 36 und ein Steuergerät 38 zum Ansteuern der Bremse 36.

Für eine Wartungs- und/oder Reparaturarbeit kann bei dem Kraftfahrzeug 10 auf sehr zuverlässige Weise gesichert werden, so dass das Bordnetz 14 spannungsfrei ist. Hierzu ist eine Steuereinrichtung 40 in dem Kraftfahrzeug 10 bereitgestellt, die mit der Anschlusseinrichtung 20, dem Ladegerät 16, der Hochvoltbatterie 12, dem Generator 32, dem Steuergerät 38 für die Bremse und dem Motorsteuergerät 34 gekoppelt sein kann. Es können auch nur eines oder einige dieser Elemente mit der Steuereinrichtung 40 gekoppelt sein. Die Steuereinrichtung 40 kann in Software- und/oder Hardware ausgeführt sein. Die Steuereinrichtung 40 kann hierbei durch ein einzelnes Steuergerät oder aber auch durch mehrere unterschiedliche Steuergeräte realisiert sein. Beispielsweise kann zum Bereitstellen der Steuereinrichtung 40 ein an sich bekannter Hochvolt-Koordinator zum Verwalten des Hochvolt-Systems des Kraftfahrzeugs 10 (umfassend die Hochvoltbatterie 12, das Bordnetz 14 und die Hochvoltverbraucher) entsprechend weitergebildet sein. Auch ein Gateway eines Kommunikationsbusses des Kraftfahrzeugs 10 kann Bestandteil der Steuereinrichtung 40 sein.

Zum Absichern des Kraftfahrzeugs 10 für die genannten Arbeiten kann durch die Steuereinrichtung 40 ein Schütz 42 der Hochvoltbatterie 12 geschaltet werden, so dass diese offen ist und hierdurch ein Stromfluss von Batteriezellen 44 der Hochvoltbatterie 12 hin zum Bordnetz 14 unterbrochen ist. Zusätzlich ist durch die Steuereinrichtung 40 über die genannten Kopplungen und durch Erzeugen entsprechender Steuersignale folgende Absicherung möglich.

Während der Spannungsfreischaltung wird durch die Steuereinrichtung 40 überprüft, ob ein Ladestecker in dem Steckschacht 18 steckt. Wenn dieser steckt, dann wird eine Bedienperson darauf hingewiesen, z.B. über einen (nicht dargestellten) Bildschirm oder ein anderes Ausgabemittel. Beispielsweise kann durch ein Diagnosegerät 46, welches an den Kraftwagen 10 angeschlossen worden ist, die Freischaltung initiiert worden sein und hierzu ein entsprechendes Spannungsfreischaltungssignal an die Steuereinrichtung 40 gesendet worden sein. Dann kann die Steuereinrichtung 40 mit einem Diagnosegerät 46 kommunizieren und der Warnhinweis über einen Bildschirm des Diagnosegeräts 46 ausgegeben werden. Nur wenn durch die Steuereinrichtung 40 der Ladestecker als gezogen erkannt wird, kann die Spannungsfreischaltung durch das Diagnosegerät 46 fortgesetzt werden. Wenn der Ladestecker gezogen wurde, wird beispielsweise ein Rückhaltepin 48 in den Steckerschacht 18 zu dessen Verriegelung zugefahren, wobei ein dazu nötiger Aktor Bestandteil der Anschlusseinrichtung 20 sein kann. Ein solcher Rückhaltepin 48 ist an sich aus dem Stand der Technik bekannt und wird eigentlich dazu genutzt, ein im Ladeschacht 18 steckenden Stecker während des Ladevorgangs fest im Steckschacht 18 zu halten. Wird der Rückhaltepin 48 aber bei gezogenem Stecker in den Steckschacht 18 eingefahren, so kann während der gesamten Zeit der Spannungsfreischaltung kein Ladestecker unbeabsichtigt, beispielsweise durch eine dritte Person, in den Steckschacht 18 eingesteckt werden.

Es kann aber auch der Verbrennungsmotor 22 durch die Steuereinrichtung 40 verriegelt werden, so dass dieser nicht starten kann. Die Verriegelung kann beispielsweise softwarebasiert erfolgen, indem die Steuereinrichtung 40 das Motorsteuergerät 34 ansteuert und des deaktiviert. Die Verriegelung kann auch über die elektro-hydraulische Bremse 36 erfolgen, wozu dann die Bremse 36 durch Ansteuern des Steuergeräts 38 durch die Steuereinrichtung 40 aktiviert wird, so dass die Achse 28 und damit auch die Welle 24 nicht mehr durch die Verbrennungskraftmaschine 22 rotiert werden kann. Somit wird das ungewollte Starten der Verbrennungskraftmaschine 22 beispielsweise durch eine dritte Person vermieden. Somit kann auch über den Generator keine Hochvolt-Spannung in das Bordnetz 14 eingespeist werden.

Die Steuereinrichtung 14 kann auch Schaltelemente innerhalb des Generators 32 in einen sperrenden Zustand schalten, so dass selbst bei Antreiben der Welle 24 der Generator 32 keine Hochspannung an das Bordnetz 14 abgibt. Insgesamt ist durch das Beispiel gezeigt, wie der Mensch als größter Unsicherheitsfaktor aus dem Prozess des Absicherns eines Kraftfahrzeugs für eine Spannungsfreischaltung herausgenommen wird und schließlich durch technische Maßnahmen eine Spannungsfreischaltung erfolgt.

Indem die Steuereinrichtung 40 die beschriebenen Maßnahmen zur Spannungsfreischaltung des Bordnetzes 14 durchführt, werden so die einzelnen Zugänge von elektrischer Energie hin in das Bordnetz 14 blockiert, so dass während der beschriebenen Arbeiten am Kraftfahrzeug 10 nicht durch eine Fehlbedienung des Kraftfahrzeugs 10 eine für die arbeitenden Personen gefährliche elektrische Hochvolt-Spannung in dem Bordnetz 14 entstehen kann.

Das Diagnosegerät 46 kann beispielsweise über ein Kommunikationskabel 50 mit der Steuereinrichtung 40 verbunden sein und über das Kommunikationskabel 50 Steuersignale austauschen. Anstelle oder zusätzlich zu der Steuereinrichtung 40 in dem Kraftfahrzeug 10 kann auch eine Steuereinrichtung 40' in dem Diagnosegerät 46 bereitgestellt sein, welche die Steuersignale zum Ansteuern eines oder mehrerer oder aller der Elemente 20, 16, 42, 32, 38, 34 erzeugen kann, so dass direkt durch das Diagnosegerät 46 die Energiezugänge von elektrischer Energie zum Bordnetz 14 hin gesperrt oder blockiert werden können.

## Patentansprüche

1. Verfahren zum Absichern eines Hochvolt-Bordnetzes (14) eines Kraftfahrzeugs (10) für eine Reparatur- und/oder Wartungsarbeit an dem Kraftfahrzeug (10), wobei bei dem Verfahren während oder nach einer Spannungsfreischaltung des Hochvolt-Bordnetzes (14), wobei bei der Spannungsfreischaltung ein Energiezugang einer Energieversorgungseinrichtung (12) zu dem Hochvolt-Bordnetz (14) unterbrochen wird, und wobei bei dem Verfahren der Energiezugang der Energieversorgungseinrichtung (12) und/oder zumindest ein anderer Energiezugang (16, 20, 32, 34, 38), der dazu ausgebildet ist, Energie einer weiteren Energiequelle (22) dem Hochvolt-Bordnetz (14) zuzuführen, durch eine Steuereinrichtung (40) blockiert wird, und wobei als ein Energiezugang ein elektrischer Generator (32) zum Erzeugen von elektrischer Energie für das Hochvolt-Bordnetz (14) blockiert wird,
**dadurch gekennzeichnet, dass**
bei der Spannungsfreischaltung überprüft wird, ob der Ladestecker steckt, und gegebenenfalls durch die Steuereinrichtung (40) die Spannungsfreischaltung bis zum Abziehen des Ladesteckers unterbrochen und ein Warnhinweis ausgegeben wird, wobei
- zum Blockieren des Generators (32) bei einem Verbrennungsmotor (22), der mit dem elektrischen Generator (32) gekoppelt ist, ein Motorsteuergerät (34) des Verbrennungsmotors deaktiviert wird und/oder
- ein Spannungsausgang des Generators (32) kurzgeschlossen wird und/oder
- durch Öffnen eines oder mehrerer Schaltelemente Spulenströme in dem Generator (32) unterbrochen werden und/oder
- eine Welle (24) zum Antreiben des Generators (32) mittels einer elektro-hydraulischen Bremse (36) des Kraftfahrzeugs (10) festgestellt wird.

2. Verfahren nach Anspruch 1, wobei als weiterer Energiezugang ein Ladegerät (16) blockiert wird, indem ein Steuersignal zumindest eines streuerbaren Schaltelements des Ladegeräts (16) blockiert wird.

3. Verfahren nach einem der vorhergehenden Ansprüche, wobei als ein weiterer Energiezugang ein Steckschacht (18) für einen Ladestecker blockiert wird und hierzu bei abgezogenem Ladestecker der Steckschacht (18) durch eine Verriegelungseinrichtung (48) des Steckschachts (18) verriegelt wird.

4. Verfahren nach Anspruch 3, wobei als die Verriegelungseinrichtung (48) ein Haltestift (48) für den Ladestecker in den Steckschacht (18) eingeführt wird.

5. Kraftfahrzeug mit einem Hochvolt-Bordnetz (14) und einer Steuereinrichtung (40), die dazu ausgelegt ist, ein Verfahren nach einem der vorhergehenden Ansprüche durchzuführen.

6. Diagnosegerät (46) für ein Kraftfahrzeug (10), wobei das Diagnosegerät (46) eine Kommunikationseinrichtung (50) aufweist, die dazu ausgelegt ist, Steuersignale an eine Kommunikationsschnittstelle des Kraftfahrzeugs (10) zu übertragen, wobei eine Steuereinrichtung (40) des Diagnosegeräts dazu ausgelegt ist, die Steuersignale zum Blockieren von zumindest einem Energiezugang nach einem Verfahren gemäß einem der Ansprüche 1 bis 4 zu erzeugen.

## Claims

1. Method for securing a high voltage on-board electric grid (14) of a motor vehicle (10) for repair and/or maintenance work on the motor vehicle (10), wherein during or after disconnection of the high voltage on-board electric grid (14) from voltage, wherein upon voltage disconnection, an energy inflow from an energy supply device (12) into the high voltage on-board electric grid (14) is interrupted, and wherein the energy inflow of the energy supply device (12) and/or at least one other energy inflow (16, 20, 32, 34, 38), which is configured to supply energy from a further energy source (22) to the high voltage on-board electric grid (14) is blocked by a control unit (40), and wherein, as an energy inflow, an electric generator (32) for generating electrical energy for the high voltage on-board electric grid (14) is blocked,
**characterised in that**
a check is made upon voltage disconnection whether the charging plug is inserted, and where required the voltage disconnection is suspended by the control device (40) until the charging plug is pulled out and a warning is issued, wherein
- to block the generator (32) in a combustion engine (22), which is coupled to the electric generator (32), a motor control unit (34) of the combustion engine is deactivated and/or
- a voltage output of the generator (32) is short-circuited
and/or
- coil currents in the generator (32) are interrupted by opening one or multiple switching elements and/or
- a shaft (24) for driving the generator (32) is arrested by means of an electric hydraulic brake (36) of the motor vehicle (10).

2. Method according to claim 1, wherein a charging device (16) is blocked as a further energy inflow by blocking a control signal of at least one controllable switching element of the charging device (16).

3. Method according to any one of the preceding claims, wherein a plug-in shaft (18) for a charging plug is blocked as a further energy inflow and the plug-in shaft (18) is locked by a locking device (48) of the plug-in shaft (18) when the charging plug is pulled out.

4. Method according to claim 3, wherein a retaining pin (48) for the charging plug is inserted into the plug-in shaft (18) as the locking device (48).

5. Motor vehicle having a high voltage on-board electric grid (14) and a control device (40), which is configured to implement a method according to any one of the preceding claims.

6. Diagnostic device (46) for a motor vehicle (10), wherein the diagnostic device (46) has a communication device (50), which is configured to transmit control signals to a communication interface of the motor vehicle (10), wherein a control device (40) of the diagnostics device is configured to generate the control signals for blocking at least one energy inflow by means of a method according to any one of claims 1 to 4.

## Revendications

1. Procédé pour sécuriser un réseau de bord à haute tension (14) d'un véhicule automobile (10) en vue de travaux de réparation et/ou d'entretien sur le véhicule automobile (10), dans lequel dans le procédé pendant ou après une mise hors tension du réseau de bord à haute tension (14), dans lequel lors de la mise hors tension un accès à l'énergie d'un dispositif d'alimentation en énergie (12) au réseau de bord à haute tension (14) est coupé, et dans lequel dans le procédé l'accès à l'énergie du dispositif d'alimentation en énergie (12) et/ou au moins un autre accès à l'énergie (16, 20, 32, 34, 38) qui est conçu pour amener de l'énergie d'une autre source d'énergie (22) au réseau de bord à haute tension (14) sont bloqués par un dispositif de commande (40), et dans lequel un générateur électrique (32) destiné à produire de l'énergie électrique pour le réseau de bord à haute tension (14) est bloqué en tant qu'accès à l'énergie,
**caractérisé en ce que**
lors de la mise hors tension, on vérifie si la prise de recharge est enfichée et, le cas échéant, on interrompt au moyen du dispositif de commande (40) la mise hors tension jusqu'au retrait de la prise de recharge et on délivre un avertissement, et
- pour le blocage du générateur (32) dans le cas d'un moteur à combustion interne (22) qui est couplé au générateur électrique (32), on désactive un appareil de commande de moteur (34) du moteur à combustion interne et/ou
- on court-circuite une sortie de tension du générateur (32) et/ou
- en ouvrant un ou plusieurs commutateurs, on coupe des courants de bobines dans le générateur (32) et/ou
- on immobilise un arbre (24) destiné à l'entraînement du générateur (32) au moyen d'un frein électrohydraulique (36) du véhicule automobile (10).

2. Procédé selon la revendication 1, dans lequel on bloque en tant qu'autre accès à l'énergie un appareil de recharge (16) en bloquant un signal de commande d'au moins un commutateur commandable de l'appareil de recharge (16).

3. Procédé selon l'une des revendications précédentes, dans lequel on bloque en tant qu'autre accès à l'énergie un socle de connexion (18) destiné à une prise de recharge et, lorsque la prise de recharge est retirée, on verrouille à cet effet le socle de connexion (18) au moyen d'un dispositif de verrouillage (48) du socle de connexion (18).

4. Procédé selon la revendication 3, dans lequel, comme dispositif de verrouillage (48), on introduit une goupille de fixation (48) destinée à la prise de recharge dans le socle de connexion (18).

5. Véhicule automobile avec un réseau de bord à haute tension (14) et avec un dispositif de commande (40) qui est conçu pour mettre en oeuvre un procédé selon l'une des revendications précédentes.

6. Appareil de diagnostic (46) pour un véhicule automobile (10), lequel appareil de diagnostic (46) comporte un dispositif de communication (50) qui est conçu pour transmettre des signaux de commande à une interface de communication du véhicule automobile (10), un dispositif de commande (40) de l'appareil de diagnostic étant conçu pour produire les signaux de commande destinés à bloquer au moins un accès à l'énergie selon un procédé selon l'une des revendications 1 à 4.
